Europäisches Patentamt

European Patent Office

Office européen des brevets

(19)

(11) Veröffentlichungsnummer: **0 255 146 B1**

(12) **EUROPÄISCHE PATENTSCHRIFT**

(45) Veröffentlichungstag der Patentschrift: **10.06.92**

(51) Int. Cl.⁵: **G01N 15/08**, B01D 46/42

(21) Anmeldenummer: **87111120.9**

(22) Anmeldetag: **31.07.87**

(54) **Verfahren und Vorrichtung zum Testen von Filtern in explosionsgefährdeter Umgebung.**

(30) Priorität: **01.08.86 DE 3626163**

(43) Veröffentlichungstag der Anmeldung:
**03.02.88 Patentblatt 88/05**

(45) Bekanntmachung des Hinweises auf die
Patenterteilung:
**10.06.92 Patentblatt 92/24**

(84) Benannte Vertragsstaaten:
**AT BE CH DE FR GB IT LI NL SE**

(56) Entgegenhaltungen:
**EP-A- 0 051 373**
**FR-A- 2 455 730**

(73) Patentinhaber: **PALL CORPORATION**
**30 Sea Cliff Avenue**
**Glen Cove New York 11542(US)**

(72) Erfinder: **Kauke, Otto-Heinz, Dipl.-Ing.**
**In der Gelbwiese 6**
**W-6455 Erlensee(DE)**

(74) Vertreter: **Geissler, Bernhard, Dr. Patent- und**
**Rechtsanwälte et al**
**Bardehle-Pagenberg-Dost- Altenburg-**
**Frohwitter & Partner Postfach 86 06 20**
**W-8000 München 86(DE)**

## Beschreibung

Die Erfindung betrifft ein Verfahren und eine Vorrichtung zum Testen von Filtern in einer explosionsgefährdeten Umgebung.

Zur Beurteilung von Filtrationen muß der Zustand eines Filters vor und nach der Filtration bekannt und beurteilbar sein. Die zu diesem Zweck notwendigen Filtertests können auch in Umgebungen notwendig sein, die eine explosionsgefährdete Atmosphäre enthalten, beispielsweise entzündbare Gase oder Dämpfe.

Bisher bekannte Vorrichtungen und Verfahren zum Testen von Filtern in einer explosionsgefährdeten Umgebung verwenden nicht elektronische Testvorrichtungen. Somit sind keine vollautomatischen Tests einschließlich deren schriftlicher Protokollierung durchführbar. Bei modernen Prüfverfahren ist es notwendig, kurz vor und während des Tests Testparameter in die Vorrichtung einzugeben, um einen Test auch kurzfristig an die zu testenden Filtersysteme und die Umgebung anzupassen. Dies ist bei herkömmlichen mechanischen Vorrichtungen nicht möglich. Der Test muß stets neu durchgeführt werden.

Aus FR-A-2 455 730 ist eine Meßvorrichtung bekannt, die in einem unter Schutzgas gehaltenem Gehäuse angeordnet ist, wobei die elektrische versorgung abgeschaltet wird, wenn der überdruck des Schutzgases innerhalb des Gehäuses einen bestimmten wert unterschreitet.

Es ist die Aufgabe der vorliegenden Erfindung, ein neues Verfahren und eine neue Vorrichtung anzugeben, womit eine Filterprüfung auch in explosionsgefährdeter Umgebung vollautomatisch elektronisch durchgeführt werden kann.

Diese Aufgabe wird durch das im Anspruch 1 angegebene Verfahren und durch die in Anspruch 9 angegebene Vorrichtung gelöst.

Erfindungsgemäß wird die Testvorrichtung mit Schutzgas durchspült und anschließend ein Überdruck während des Betriebes gewährleistet. Dadurch wird verhindert, daß ein explosionsgefährdetes Gasgemisch in die Druckvorrichtung eindringt. Filtertestparameter sind vor und während des Tests frei einstellbar. Vorteilhafterweise kann die Vorrichtung dadurch sehr schnell installiert werden. Die Sicherheit, daß kein explosionsgefährdetes Gasgemisch mehr in der Vorrichtung vorhanden ist, bevor der Test beginnt, wird durch eine Spülung mit einem Schutzgas erreicht, wobei vorzugsweise mindestens das 5-fache Volumen der Vorrichtung an Schutzgas durch die Vorrichtung geleitet wird.

In einer bevorzugten Ausführungsform wird als Schutzgas das Testgas verwendet. Dadurch vermindert sich der Aufwand zum Betreiben der Vorrichtung beträchtlich. Besonders vorteilhaft ist es, wenn als Schutz- und Testgas Luft verwendet wird.

In der Vorrichtung wird ein geeigneter Überdruck aufrechterhalten. Es ist jeder Überdruck denkbar, bevorzugterweise wird jedoch ein Überdruck von 10 bis 20 mbar aufrechterhalten. Sobald der Überdruck unter einen vorbestimmten Wert absinkt, wird die elektrische Versorgung der Vorrichtung sofort abgeschaltet. Dadurch ist gewährleistet, daß ein elektrischer Funken nur dann entstehen kann, wenn kein explosionsgefährdetes Gasgemisch in der Vorrichtung vorhanden ist.

Beim Spülen mit Schutzgas wird der Volumenstrom des Schutzgases überwacht. Dies ist wichtig, um festzustellen, ob möglicherweise Austrittsöffnungen verstopft sind. Dies würde zwar einen Druckanstieg, aber keine Spülung innerhalb der Vorrichtung bewirken. Bei Unregelmäßigkeiten wird die elektrische Spannung nicht eingeschaltet, um keinen Funken in explosionsgefährdeter Atmosphäre zu erzeugen.

Die Vorrichtung weist ein annähernd gasdichtes Gehäuse auf, das geringeren Anforderungen genügt, als ein druckfestes explosionsgeschütztes Gehäuse herkömmlicher Art. Das annähernd gasdichte Gehäuse weist Zufuhr- und Abflußöffnungen für das Schutzgas und die pneumatische Versorgung auf.

Vorteilhafterweise weist das Gehäuse eine von außen bedienbare Tastatur auf. Die Tastatur ist mit einer Kunststoffolie gas- und wasserdicht abgedeckt. Über diese Tastatur können Testparameter und Teststeuerungsdaten in die Vorrichtungen eingegeben werden. Die elektrische Spannungsversorgung für die elektronische Regel- und Steuervorrichtung sowie die an diese angeschlossenen elektrischen Einrichtungen wird über pneumatische Komponenten gesteuert. Die Tastatur ist ein Bestandteil des Gehäuses und somit gasdicht.

Zum mechanischen Schutz wird die Folie mit einer Makrolonplatte (2 - 6 mm Dicke, Rastermaß 19,05 x 19,05 mm) abgedeckt, durch Bedienungsöffnungen in dieser Makrolonabdeckung kann die Folientastatur leicht zugänglich gemacht werden.

Zum Schutz des Displayfeldes wird eine entspiegelte Anzeige in die Folie gasdicht eingeklebt. Zur Protokollierung eines Tests ist ein Drucker im Gehäuse vorgesehen. Der Drucker ist ebenfalls im gasdichten Gehäuse untergebracht. Zur Erhaltung der elektronischen Speicherinhalte der Anlage auch nach Abschalten der elektrischen Versorgung ist eine Batterie vorgesehen. Diese Batterie ist geschützt gekapselt und mit einer Kurzschlußstromschutzschaltung beschaltet, so daß von ihr zu keiner Zeit elektrische Funken verursacht werden können.

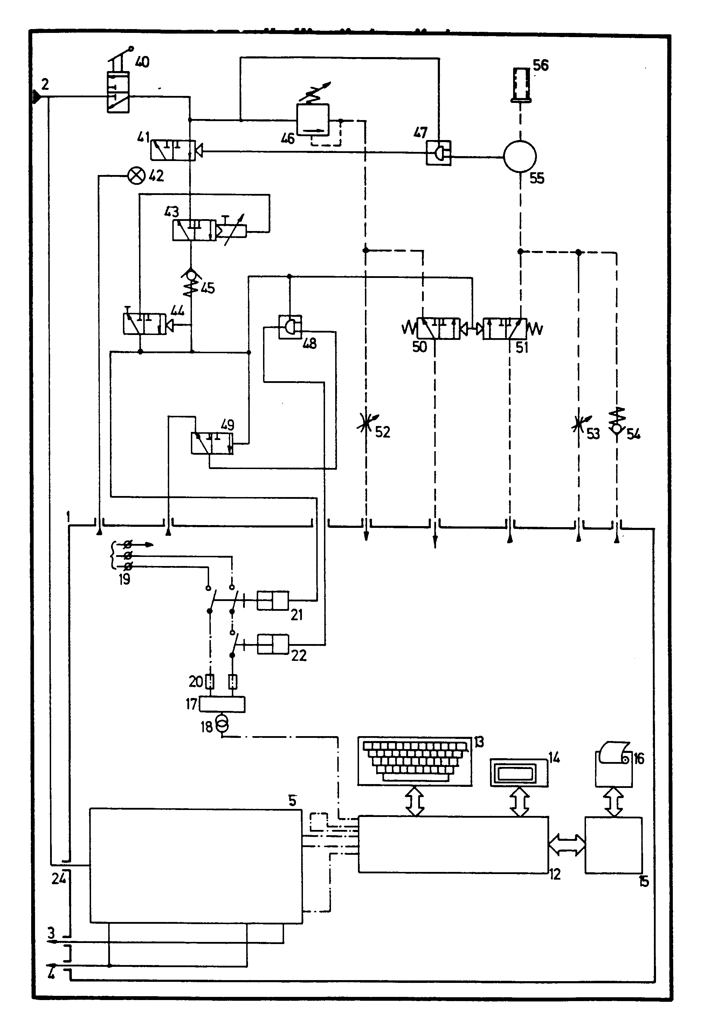

Weitere Vorteile, Merkmale und Anwendungsmöglichkeiten der vorliegenden Erfindung ergeben sich aus den Unteransprüchen und aus der nachfolgenden Beschreibung eines Ausführungsbeispiels in Verbindung mit der Zeichnung.

Die einzige Figur zeigt den schematischen Aufbau einer Ausführungsform einer Vorrichtung der vorliegenden Erfindung.

Die Vorrichtung weist ein gekapseltes Gehäuse 1 und einen nicht gekapselten Teil aus. Das Gehäuse 1 ist gasdicht, d. h. es hält einen Druck von innen aus.

Innerhalb des Gehäuses 1 befindet sich eine pneumatische Einheit 5, die mit einer Meß-, Steuer- und Verarbeitungseinheit 12 verbunden ist.

Die pneumatische Einheit 5 weist Magnetventile auf, die in geeigneter Weise einen Strömungsweg für ein Testgas steuern.

Die pneumatische Einheit 5 ist so ausgelegt, daß Testgas nicht nur durch eine Zuleitung zu einem Meßausgang 3 gelangen kann, sondern durch eine weitere Leitung zu einem Entlüftungsausgang 4 fließen kann.

Die Meß-, Steuer- und Verarbeitungseinheit 12 weist eine zentrale Processor-Einheit mit weiteren elektronischen Komponenten auf (18, 14, 15, 16), die analoge und digitale Funktionen ausführen.

Die zur Versorgung der elektrischen Einrichtungen notwendige elektrische Spannung wird über ein Zuleitungskabel und die Klemmen 19 in das gasdichte Gehäuse 1 zugeführt. Die notwendige Gasdichtheit des Anschlusses kann in jeder beliebigen herkömmlichen Weise ausgeführt werden. Die elektrischen Anschlüsse können beispielsweise eine dreipolige Leitung sein. In die elektrische Leitung ist ein zweipoliger pneumatischer 21 und ein einpoliger pneumatischer 22 betriebener Schalter geschaltet. Die verschiedenen Funktionen werden durch eine geeignete pneumatische Ansteuerung realisiert.

Hinter den Schaltern können Verarbeitungseinrichtungen für Strom bzw. Spannung vorhanden sein. Im dargestellten Ausführungsbeispiel sind dies ein Netzfilter 17 und ein Transformator 18, eine doppelpolige elektrische Sicherheitsvorrichtung 20, sowie die komplette Stromversorgung einschließlich der zugehörigen Elektronik 12.

Alle bisher erwähnten Teile und Einrichtungen befinden sich innerhalb des Gehäuses 1, also in dem gekapselten gasdichten Teil.

Das Testgas wird durch einen Eingang 24 zu- und durch einen Ausgang abgeführt.

Im vorliegenden Ausführungsbeispiel wird als Test- und Schutzgas Luft verwendet. Diese Luft wird im nichtgekapselten Teil der Vorrichtung über einen Eingangsanschluß 2 zugeführt. Die Luft hat dabei einen geeigneten Überdruck im Bereich von 1 - 10 bar. Ein Teil der Luft wird im gekapselten Gehäuse 1 als Schutzgas verwendet.

Das Schutzgas und die Steuerluft werden hinter dem Eingangsanschluß 2 abgezweigt. Über ein von Hand bedienbares Hauptventil 40 wird ein Strömungsweg freigegeben, durch den die Luft in das Steuernetz und in das Schutzgasnetz einströmen kann. Nach Einschalten des Hauptventils 40 wird ein Teil der Luft über einen Druckminderer 46 auf einen geeigneten Druck gemindert und über das pneumatisch gesteuerte Ventil 50 in das Gehäuse 1 eingeleitet. Sie durchspült das Gehäuse in geeigneter Menge und wird über das pneumatisch gesteuerte Ventil 51 wieder aus dem Gehäuse abgeleitet und tritt nach Eintritt in eine Entspannungskammer 55 über einen Funkenschutz 56 in die Atmosphäre aus.

Gleichzeitig mit dem Einleiten des Schutzgases in das Gehäuse 1 wird über den Hauptschalter 40 und ein pneumatisches Ventil 41 ein pneumatischer Zeitschalter 43 angesteuert, der die Ein- und Ableitung des Spülschutzgases über die Ventile 50 und 51 zeitlich begrenzt. Mit Hilfe des Zeitschalters 43 kann somit ein x-facher Luftwechsel im Gehäuse eingestellt werden.

Gleichzeitig mit dem Abschalten der Ventile 50 und 51 wird der Zeitschalter 43 über ein Rückschlagventil 45 das Hilfsventil 44 schalten, das seinerseits den elektro-pneumatischen Schalter 21 einschaltet.

Ist in dem Gehäuse 1 nach dem Schutzgas-Spülvorgang auch noch ein Schutzgas-Überdruck von mindestens 0,5 mbar vorhanden, so wird mit Hilfe des Niederdruckverstärkers 48 und das über dem Niederdruckverstärker geschaltete Hilfsventil 49 der elektropneumatische Schalter 22 eingeschaltet. Nach den Vorbedingungen "ausreichende Schutzgasspülung und"ausreichender Gehäuseüberdruck" werden nun über die elektropneumatischen Schalter die elektrischen bzw. die elektronischen Elemente im gasdicht gekapselten Gehäuseteil eingeschaltet und in Betrieb genommen.

An die Entspannungskammer 55 ist ein Niederdruckverstärker 47 angeschlossen. Bei Druckanstieg in der Entspannungskammer wird der Niederdruckverstärker 47 das Hilfsventil 41 einschalten . Das Hilfsventil 41 unterbricht die Funktion des Zeitgebers 43. Ein Einschalten des elektropneumatischen Schalters 21 wird dadurch verhindert.

Mit dieser Schaltung ist eine Überwachung des Spülluftstromes gewährleistet. Mit dem Niederdruckverstärker 47 können Unregelmäßigkeiten (Fehlen oder Schwanken) des Ausgangsluftstromes festgestellt werden. Diese Unregelmäßigkeiten können z. B. durch Verstopfen der Luftaustrittsöffnungen am Funkenschutz 56 auftreten. Wenn die Austrittsöffnungen verstopft sind, wird im Gehäuse 1 zwar die Spülluft (Schutzgas) eintreten, aber nicht, wie gewünscht, ein noch im Gehäuse 1 befindliches explosionsfähiges Gasgemisch herausspülen. Es findet kein Volumenstrom statt, sondern es wird sich lediglich der Gasdruck im Gehäuse und im Leitungssystem erhöhen.

Bei Druckanstieg schaltet der Niederdruckverstärker 47 das Hilfsventil 41. Dieses unterbricht die Steuerluft zum Zeitgeber 43 und der elektropneumatische Schalter 21 kann nicht eingeschaltet werden. Der Bediener muß dann die Vorrichtung überprüfen und die Verstopfung der Luftwege beseitigen, bevor die Vorrichtung wieder in Betrieb genommen werden kann.

Vorteilhafterweise ist das Hilfsventil 41 mit einer Verriegelung versehen, die vom Bediener von Hand entriegelt werden muß.

Mit dem Niederdruckverstärker 48 wird der notwendige Überdruck im Gehäuse 1 während des Betriebes überwacht. Sinkt der Überdruck nach Einschalten der elektrischen Komponenten im Gehäuse 1 unter einen Wert von 0,5 mbar, verursacht durch ein Leck im Gehäuse oder ein mutwilliges Öffnen des Gehäuses, so wird der elektro-pneumatische Schalter 22 ausgeschaltet.

Nach Abschalten der Schutzgasspülung über Ventil 50 und 51 steht zum Erhalt des Überdrucks im Gehäuse mittels Schutzgas das Gas über eine Drossel 52 am Gehäuse 1 an. Das Schutzgas strömt durch vorhandene Undichtigkeiten, die in der Vorrichtung durchaus vorhanden sein können, nach außen. Der Druckverlust wird mit Schutzgas über die Drossel 52 ausgeglichen.

Es ist jedoch auch möglich, über eine zweite Drossel 53 ein "definiertes Leck" darzustellen, um einen definierten Schutzgasstrom zu gewährleisten. Alle Drosseln in der Vorrichtung können einstellbar sein. Am Gehäuse 1 kann ein Überdruckventil 54 angeordnet sein, um zu gewährleisten, daß kein unzulässiger Überdruck im Gehäuse 1 entsteht. Alle gezielten Auslässe, d. h. die über die Drossel 53 und das Überdruckventil 54 austretenden Schutzgasströme werden über die Entspannungskammer 55 dem Funkenschutz 56 zugeleitet.

Der anstehende Überdruck im Gehäuse wird mit einer pneumatischen Kontrollanzeige 42 angezeigt.

Die mit der Meß-, Steuer- und Verarbeitungseinrichtung 12 verbundene Tastatur muß gasdicht im Gehäuse 1 angeordnet sein, wobei sie trotzdem betätigbar sein muß. Die Gasdichtheit wird durch eine geeignete Kunststoffolie gewährleistet, die mit der Tastatur verbunden ist. Zum mechanischen Schutz der Folie kann z. B. eine Makrolonplatte von 2 - 6 mm Stärke über der Tastatur angeordnet sein. Durch geeignete Bohrungen können die Tasten unter der Folie bedient werden (Lochmaske). Die Bohrungen in der Abdeckplatte sind so bemessen, daß sie die darunter liegende Tastatur vor Beschädigung durch einen kugelförmigen Körper von 2,5 cm Durchmesser schützen.

Zum Protokollieren von Testergebnissen ist ein Drucker im Gehäuse vorgesehen. Dieser ist von außen während des Tests nicht bedienbar, da er mit einer gasdichten Haube abgedeckt ist.

Zum Erhalten von elektronischen Speicherinhalten in der Meß-, Steuer-und Verarbeitungseinheit 12, auch nach dem Abschalten der Versorgungsspannung durch den Schalter 21 - 22, ist eine Batterie oder ein Akkumulator vorgesehen, die mechanisch gekapselt sind und somit in herkömmlicher Weise explosionsgeschützt. Darüber hinaus ist die Batterie bzw. der Akkumulator mit einer Kurzschlußstromschutzschaltung beschaltet, die gewährleistet, daß der Kurzschlußstrom einen vorbestimmten Wert nicht überschreitet. Dadurch wird Überhitzung oder Funkenbildung an den Batterieklemmen verhindert.

Ein Filtertest mit der beschriebenen Vorrichtung läuft wie folgt ab:
Der Eingangsanschluß 2 wird an eine geeignete Druckluftquelle angeschlossen. Die Vorrichtung wird über das pneumatische Hauptventil 40 eingeschaltet. Nach Ablauf einer vorbestimmten Zeit, durch die gewährleistet ist, daß das Gehäuse 1 mit dem notwendigen Volumenstrom an Luft durchgespült worden ist, wird das Gerät über die pneumatisch betriebenen Schalter 21 bis 22 eingeschaltet. Danach können Testparameter über die Tastatur 13 eingegeben werden. Die Eingabe der Testparameter kann über die Anzeige 14 kontrolliert werden. Gleichzeitig können die Testparameter über den Drucker 16 protokolliert werden. Nach Starten des Testvorganges läuft ein Filtertestverfahren bekannter Art ab, beispielsweise ein Intergritätstest.

Durch den Überdruck der Luft, die hier als Schutzgas dient, wird gewährleistet, daß keine explosionsgefährdeten Gase oder Dämpfe in das annähernd gasdichte Gehäuse 1 eindringen können.

**Patentansprüche**

1.   Verfahren zum Testen von Filtern in explosionsgefährdeter Umgebung, bei dem ein Testgas durch ein Filtersystem geführt wird und Parameter dieses Gases in einer elektrisch betriebenen Prüfvorrichtung erfaßt werden, **gekenzeichnet** durch die folgenden Schritte:
- Herstellen der Verbindungen zwischen Prüfvorrichtung und Filter
- Spülen der Prüfvorrichtung mit einem Schutzgas und Erzeugen eines Überdrucks des Schutzgases innerhalb der Prüfvorrichtung gegenüber dem Umgebungsdruck außerhalb der Prüfvorrichtung;
- Überwachen des Volumenstroms des Schutzgases beim Spülen und Nichteinschalten einer zur Versorgung von elektrischen Einrichtungen der Prüfvorrichtung notwendigen elektrischen Spannung bei Feststellen von Unregelmäßigkeiten des Volumenstromes des Schutzgases bzw. der Feststellung, daß eine nicht ausreichende Spülgasmenge die Prüfvorrichtung durchflossen hat;

- Einschaltern der elektrischen Spannung, nachdem sichergestellt ist, daß sich nur noch Schutzgas in der Vorrichtung befindet;
- Aufrechterhalten des Überdrucks des Schutzgases innerhalb der Prüfvorrichtung,
- Abschalten der elektrischen Spannung, wenn der Überdruck des Schutzgases innerhalb der Prüfvorrichtung einen vorbestimmten Wert unterschreitet.

2. Verfahren nach Anspruch 1, dadurch gekennzeichnet, daß vor oder während des Testens Testparameter in die Prüfvorrichtung ein- und ausgebbar sind.

3. Verfahren nach Anspruch 1 oder 2, dadurch gekennzeichnet, daß zum Spülen mindestens das 5-fache Volumen der Prüfvorrichtung an Schutzgas durch die Prüfvorrichtung geleitet wird.

4. Verfahren nach einem der Ansprüche 1 bis 3, dadurch gekennzeichnet, daß das Testgas gleichzeitig als Schutzgas verwendet wird.

5. Verfahren nach einem der Ansprüche 1 bis 4, dadurch gekennzeichnet, daß das Test- und/oder das Schutzgas Luft ist.

6. Verfahren nach einem der Ansprüche 1 bis 5, dadurch gekennzeichnet, daß das Test- und Schutzgas aus der gleichen Quelle außerhalb des explosionsgefährdeten Bereiches zugeführt werden.

7. Verfahren nach einem der Ansprüche 1 bis 6, dadurch gekennzeichnet, daß der Überdruck des Schutzgases im Bereich von 0,5 mbar bis 50 mbar liegt.

8. Verfahren nach einem der Ansprüche 1 bis 7, dadurch gekennzeichnet, daß der Überdruck im Gehäuse überwacht wird, so daß bei Druckabfall die elektrische Spannung abgeschaltet wird.

9. Prüfvorrichtung zum Durchführen des Verfahrens nach einem der Ansprüche 1 bis 8, gekennzeichnet durch:

- ein Gehäuse (1) mit Schutzgaszu- und abführungsöffnungen
- eine Tastatur (13) innerhalb des Gehäuses (1) zum Eingeben von Werten von außen, die durch eine Kunststoffolie gasdicht abgedeckt ist,
- eine Meß-, Steuer- und Verarbeitungseinrichtung (12), innerhalb des Gehäuses
- pneumatische Schalter (21, 22) die bei Überschreiten eines vorbestimmten Überdrucks des Schutzgases innerhalb des Gehäuses die elektrische Versorgung der Vorrichtung einschalten und bei Unterschreiten des Überdruckes ausschalten,
- eine pneumatische Einrichtung zur Steuerung des Testgasstromes (5), und
- eine Einrichtung (47) zur Überwachung des Schutzgasstromes und zur Verhinderung des Einschaltens der elektrischen Versorgung bei unzureichendem oder schwankendem Schutzgasstrom.

10. Die Vorrichtung nach Anspruch 9, dadurch gekennzeichnet, daß die Kunststoffolie zum Abdecken der Tastatur (13) gasdicht ist und zum mechanischen Schutz der Folie eine Makrolonplatte von 2 - 6 mm Stärke über der Tastatur angeordnet ist.

11. Vorrichtung nach einem der Ansprüche 9 oder 10, gekennzeichnet durch eine mit der Meß-, Steuer- und Verarbeitungseinheit (12) verbundene Anzeige (14) und/oder einem Drucker (16).

12. Vorrichtung nach einem der Ansprüche 9 bis 11, gekennzeichnet durch eine mechanisch gekapselte Batterie

13. Vorrichtung nach Anspruch 12, dadurch gekennzeichnet, daß die Batterie mit einer Kurzschlußschutzschaltung beschaltet ist, die ihren Kurzschlußstrom auf einen maximalen vorbestimmten Wert begrenzt.

14. Vorrichtung nach einem der Ansprüche 11 bis 13, dadurch gekennzeichnet, daß der Drucker durch eine im wesentlichen gasdicht schließende Haube abgedeckt ist.

**Claims**

1. Method for testing filters in a explosive environment, in which method a test gas is fed into a filter system ad parameters of said gas are detected in a electrically operated test apparatus, said method being **characterized** by the following steps:

- providing connections between the test apparatus and the filter;

- sweeping the test apparatus with a inert gas ad generating a overpressure of the inert gas inside the test apparatus as compared to the ambient pressure outside the test apparatus;
- monitoring the volume flow of the inert gas on sweeping and non-switching-on of a electrical voltage required for the supply of the electric means of the test apparatus in cases of detection of irregularities of the volume flow of the inert gas and in case of detection that an insufficient amount of sweeping gas has passed the test apparatus, respectively;
- switching on of the electrical voltage after it has been ensured that only inert gas remains in the apparatus;
- maintaining the overpressure of the inert gas inside the test apparatus;
- switching off the electrical voltage when the overpressure of the inert gas inside the test apparatus drops below a predetermined value.

2. The method according to claim 1, characterized in that test parameters can be input into and output from the test apparatus prior to and during the test procedure.

3. The method according to claim 1 or 2, characterized in that for sweeps an amount of inert gas equal to at least five times the volume of the test apparatus is led through the test apparatus.

4. The method according to any of the claims 1 to 3, characterized in that the test gas is used simultaneously as inert gas.

5. The method according to any of the claims 1 to 4, characterized in that the test gas and/or the inert gas is air.

6. The method according to any of the claims 1 to 5, characterized in the test ad inert gas are fed from the same source outside the explosive area.

7. The method according to any of the claims 1 to 6, characterized in that the overpressure of the inert gas is in a rage from 0-5 mbar to 50 mbar.

8. The method according to any of the claims 1 to 7, characterized in that the overpressure in the housing is monitored to ensure that the electric voltage is cut off in case of a pressure drop.

9. A test apparatus for preforming the method according to any of the claims 1 to 8, characterized by:
- a housing (1) having inert gas feed and discharge ports;
- a keyboard (13), which is gas-tightly covered by a plastic foil, inside the housing (1) for entering values from outside,
- a measurement, control ad processing means (12) inside the housing,
- pneumatic switches (21,22) for switching the electrical supply of the apparatus on when a predetermined overpressure of the inert gas in the housing is exceeded and for switching the electrical supply off when said overpressure drops below said predetermined value,
- pneumatic means for controlling the test gas flow (5), and
- means (47) for monitoring the inert gas flow and for preventing the electrical supply from being switched on when the inert gas flow is insufficient or fluctuating.

10. The apparatus according to claim 9, characterized in that the plastic foil for covering the keyboard (13) is gas-tight ad that for mechanical protection of the foil a macrolon board having a thickness of 2-6 mm is arranged over the keyboard.

11. The apparatus according to one of the claims 9 or 10, characterized by a printer (16) and/or a display (14) connected to the measurement, control ad processing unit (12).

12. The apparatus according to any of the claims 9 to 11, characterized by a mechanically encased battery.

13. The apparatus according to claim 12, characterized in that the battery is provided with a short circuit current protective circuit for limiting its short circuit current to a predetermined maximum value.

14. The apparatus according to any of the claims 11 to 13, characterized in that the printer is covered by a substantially gas-tightly closing hood.

**Revendications**

1. Procédé pour tester des filtres dans un milieu explosible, selon lequel on fait passer un gaz d'essai à travers un système filtrant et on enregistre des paramètres de ce gaz dans un dispositif d'essai à fonctionnement électrique,

caractérisé par les étapes suivantes :
- réalisation des connexions entre le dispositif d'essai et le filtre;
- rinçage du dispositif d'essai avec un gaz protecteur, et production d'une surpression du gaz protecteur à l'intérieur du dispositif d'essai, par rapport à la pression ambiante à l'extérieur du dispositif d'essai;
- surveillance du flux volumique de gaz protecteur lors du rinçage, et non enclenchement d'une tension électrique, nécessaire pour l'alimentation des appareils électriques du dispositif d'essai, en cas de constatation d'irrégularités du flux volumique de gaz protecteur, ou de constatation qu'une quantité insuffisante de gaz de rinçage a traversé le dispositif d'essai;
- enclenchement de la tension électrique une fois qu'il est garanti qu'il n'y a plus que du gaz protecteur dans le dispositif;
- maintien de la surpression du gaz protecteur à l'intérieur du dispositif d'essai,
- coupure de la tension électrique si la surpression du gaz protecteur à l'intérieur du dispositif d'essai tombe en dessous d'une valeur prédéterminée.

2. Procédé selon la revendication 1, caractérisé en ce qu'avant ou pendant l'essai, on peut introduire des paramètres d'essai dans le dispositif d'essai et les éditer.

3. Procédé selon la revendication 1 ou 2, caractérisé en ce que, pour le balayage, on fait passer à travers le dispositif d'essai un volume de gaz protecteur au moins 5 fois égal au volume du dispositif d'essai.

4. Procédé selon l'une des revendications 1 à 3, caractérisé en ce que le gaz d'essai est simultanément utilisé comme gaz protecteur.

5. Procédé selon l'une des revendications 1 à 4, caractérisé en ce que le gaz d'essai et/ou le gaz protecteur est de l'air.

6. Procédé selon l'une des revendications 1 à 5, caractérisé en ce que le gaz d'essai et le gaz protecteur sont alimentés à partir de la même source, qui se trouve à l'extérieur de la zone explosible.

7. Procédé selon l'une des revendications 1 à 6, caractérisé en ce que la surpression du gaz protecteur se situe dans la plage allant de 0,5 mbar à 50 mbars.

8. Procédé selon l'une des revendications 1 à 7, caractérisé en ce qu'on surveille la surpression dans le boîtier, de sorte que la tension électrique est coupée en cas de chute de pression.

9. Dispositif d'essai pour la mise en oeuvre du procédé selon l'une des revendications 1 à 8, caractérisé par :
- un boîtier (1), avec des ouvertures d'amenée et d'évacuation du gaz protecteur,
- un clavier (13), qui se trouve à l'intérieur du boîtier (1), sert à introduire des valeurs de l'extérieur et est recouvert de manière étanche aux gaz par une feuille de matière plastique,
- un appareil de mesure, de commande et de traitement (12), à l'intérieur du boîtier,
- des interrupteurs pneumatiques (21, 22), qui enclenchent l'alimentation électrique du dispositif en présence d'un dépassement d'une surpression déterminée du gaz protecteur à l'intérieur du boîtier, et la coupent en cas de sous-dépassement de la surpression,
- un appareil pneumatique pour commander le flux de gaz d'essai (5), et
- un appareil (47) pour surveiller le flux de gaz protecteur et pour empêcher l'enclenchement de l'alimentation électrique en présence d'un flux de gaz protecteur insuffisant ou fluctuant.

10. Dispositif selon la revendication 9, caractérisé en ce que la feuille de matière' plastique destinée à recouvrir le clavier (13) est étanche aux gaz, et une plaque de "Makrolon" de 2 à 6 mm d'épaisseur est disposée au-dessus du clavier pour la protection mécanique de la feuille.

11. Dispositif selon la revendication 9 ou 10, caractérisé par une unité d'affichage (14) et/ou une imprimante (16), reliées à l'unité de mesure, de commande et de traitement (12).

12. Dispositif selon l'une des revendications 9 à 11, caractérisé par une batterie mécaniquement blindée.

13. Dispositif selon la revendication 12, caractérisé en ce que la batterie est reliée à un montage de protection contre les courts-circuits, qui limite son courant de court-circuit à une valeur maximale prédéterminée.

14. Dispositif selon l'une des revendications 11 à 13, caractérisé en ce que l'imprimante est recouverte par un capot qui la ferme de manière
sensiblement étanche aux gaz.